# EUROPEAN PATENT SPECIFICATION

(11) **EP 4 197 872 B1**
(45) Date of publication and mention of the grant of the patent: **26.06.2024**
(21) Application number: 21215098.1
(22) Date of filing: 16.12.2021
(51) Int. Cl.: B60W 50/00, B60W 50/08, B60W 50/14, B60W 30/08, B60Q 1/46, B60Q 1/52, B60Q 9/00, B60Q 1/30, B60Q 1/50

(54) **METHOD AND SYSTEM FOR CRUISE CONTROL DEACTIVATION**
VERFAHREN UND SYSTEM ZUR GESCHWINDIGKEITSREGLERDEAKTIVIERUNG
PROCÉDÉ ET SYSTÈME DE DÉSACTIVATION DE RÉGULATEUR DE VITESSE

(43) Date of publication of application: 21.06.2023
(73) Proprietor: VOLVO TRUCK CORPORATION, 405 08 Göteborg (SE)
(72) Inventor: ERIKSSON, Anders, 423 49 Torslanda (SE); TAIT, Guilherme, Chesapeake, 23322 (SE)
(74) Representative: Zacco Sweden AB

(56) References cited:
- DE-A1-102012 203 182
- DE-A1-102013 007 001
- DE-A1-102015 201 272
- DE-A1-102018 210 885
- US-A1- 2019 219 691
- US-A1- 2020 320 879

## Description

### TECHNICAL FIELD

The present invention relates to a method and a system for controlling a vehicle comprising a driver support function and an information receiving device, where information regarding a severe condition and the position of the severe condition can be used to control the driver support function. The method may be used to activate a warning light of the vehicle automatically.

### BACKGROUND ART

Modern vehicles are provided with more and more functions, which may be activated both manually and automatically. Some functions are related to autonomous vehicle modes, such as speed control, automatic distance control to a vehicle in front, automatic emergency brake, dead angle indication, etc. Some of these functions can be set and controlled by the driver alone, such as a cruise control, rain sensor, etc. Some of the functions are controlled entirely by the vehicle control system, such as the emergency brake function or the dead angle indication. For some functions, the driver may set some control values but the driver can not control the function completely, such as the distance or time gap of the automatic distance control system or the allowed speed difference of the cruise control.

When it comes to safety functions, it is of advantage to let the vehicle control system be in control, since the vehicle control system can act faster and more consistently than a driver. One function that may be of advantage to deactivate when a severe condition occurs, e.g. a severe road condition such as an accident, or a severe weather condition such as fog, heavy rain or snow, is the cruise control system. The advantage of this is that the speed of the vehicle will decrease and that the driver at the same time is alerted of the severe condition.

There are several known different approaches to such a function. US 20150241878 A1 discloses a vehicle configured to operate in a semi-autonomous mode, e.g. using a cruise control. The vehicle can register info about weather, road condition or traffic accidents together with position information, and based on registered info the semi-autonomous mode can be adjusted or disengaged. If the vehicle is registered to be closer than a predetermined distance to the severe situation, manual control can be activated, and the driver may be informed that the semi-autonomous mode will be disengaged or adjusted.

US 20210094583 A1 discloses an apparatus for monitoring a driver in a self-driving vehicle. The vehicle can register info about weather, road condition or traffic accidents together with position information, and based on registered info the autonomous mode can be adjusted or disengaged.

US 20190041850 A1 discloses an autonomous vehicle mode regulator system which can receive authorization signals to authorize or inhibit operation of the vehicle in different levels of automation. A controller module controls the level of automation under which the autonomous driving system of the vehicle operates based on the signals received from the autonomous driving infrastructure. The allowable level of automation is decided based on weather, road condition or traffic accidents info together with position information.

US 20080162011 A1 discloses a cruise control where the cruise control can be automatically deactivated, and the driver is notified upon deactivation.

US 20200001869 A1 discloses a cruise control where the cruise control can be automatically deactivated, and the driver is notified upon deactivation. The cruise control is deactivated based on the activation of the windshield wiper, which may indicate bad weather, such as rain or snow.

WO 2008156383 A1 discloses an automatic activation of hazard lights of a vehicle, if the vehicle position (via GPS) is decided to be a dangerous position.

US2020320879 discloses a collision avoidance system to warn the driver in case of a collision danger with a lamp inside the driver cabin.

These systems may work fine in some conditions, but there is still room for an improved method for controlling a vehicle comprising a driver support function and an information receive device, where information regarding a severe condition and the position of the severe condition can be used to control the driver support function.

### DISCLOSURE OF INVENTION

An object of the invention is therefore to provide an improved method for controlling a vehicle comprising a driver support function and an information receiving device. A further object of the invention is to provide a system for controlling a vehicle comprising a driver support function and an information receive device. A further object of the invention is to provide a vehicle comprising such a system. An object is also to provide a computer program and a computer program product adapted to perform the steps of the method.

The solution to the problem according to the invention is described in the characterizing part of claim 1 regarding the method, in claim 7 regarding the system and in claim 11 regarding the vehicle. The other claims contain advantageous further developments of the inventive method and system. Claims for a computer program and a computer program product are also enclosed.

In a method for controlling a vehicle comprising a driver support function and an information receiving device, the steps of; receiving information regarding a severe condition and the position of the severe condition; determining the distance from the vehicle to the position of the severe condition; comparing the determined distance to a first predetermined distance; if the determined distance is smaller than the first predetermined distance, automatically adjusting or disengaging the driver support function; if the driver support function has been automatically adjusted or disengaged, comparing the determined distance to a second predetermined distance; if the determined distance is smaller than the second predetermined distance, automatically activating at least one warning light of the vehicle are comprised.

By this first embodiment of the method, the method is able to activate at least one warning light of the vehicle, e.g. a hazard light or a fog light, if a severe condition is determined. The vehicle receives information regarding a severe condition and the position of the severe condition. If the vehicle is within a first predetermined distance, the driver support function is automatically adjusted or disengaged. If the vehicle is within a second predetermined distance, the warning light is also activated.

In one example, the vehicle receives information regarding an accident and the position of the accident. If the vehicle is closer to the accident than a first predetermined distance, the speed control is deactivated and the driver is alerted that the speed control is deactivated. This will reduce the speed of the vehicle and will alert the driver that something serious is happening. If the vehicle is also closer to the accident than a second predetermined distance, the hazard light is activated. This will alert the vehicles behind the vehicle that something serious is happening.

In another example, the vehicle receives information regarding upcoming fog. If the vehicle is closer to the fog than a first predetermined distance, the speed of the speed control is set to a lower speed value, and the driver is informed about the slower set speed. This will set the speed of the vehicle to a more suitable speed with regard to the visibility. If the vehicle is also closer to the fog than a second predetermined distance, the fog light is activated. This will allow the vehicles behind to see the ego vehicle even if the visibility is reduced. The set speed oft eh vehicle may e.g. be reduced from 90 km/h to 70 km/h.

In the inventive system adapted to control a vehicle, where the vehicle comprises a driver support function, an information receiving device arranged to receive information regarding a severe condition and the position of the severe condition, and an electronic control unit arranged to determine the distance between the vehicle and the severe condition, to compare the determined distance to a first predetermined distance and to automatically adjust or disengage the driver support function if the determined distance is smaller than the first predetermined distance, the object of the invention is achieved in that the electronic control unit is further arranged to compare the determined distance to a second predetermined distance, and to automatically activate at least one warning light of the vehicle if the determined distance is smaller than the second predetermined distance.

With the inventive system, a warning light of the vehicle can be activated automatically if the vehicle is within a second predetermined distance to the severe condition, and if the driver support function has been automatically adjusted or disengaged. This will help the driver to avoid a dangerous situation, and will alert vehicles behind the ego vehicle about the dangerous situation.

In a development of the control system, the driver support function may be a cruise control or a self-driving function, the severe condition may be a weather condition, a road condition or a traffic condition such as an accident and the warning light of the vehicle may be a hazard light or a fog light.

### BRIEF DESCRIPTION OF DRAWINGS

The invention will be described in greater detail in the following, with reference to the attached drawings, in which
- Fig. 1: shows a schematic example of a vehicle provided with a system for controlling a driver support function, and
- Fig. 2: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

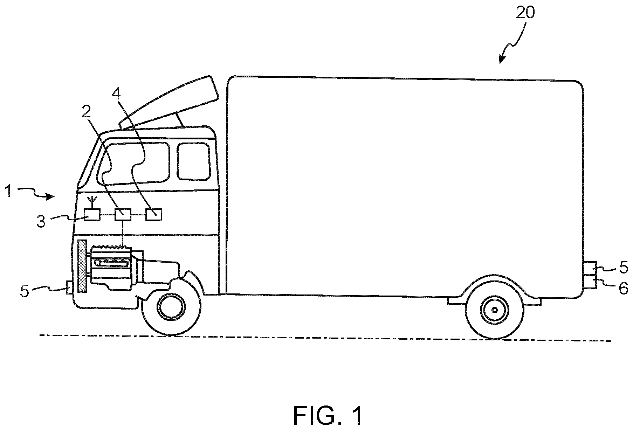

Fig. 1 shows a schematic vehicle 20 provided with an inventive system 1 adapted to control the vehicle, where the vehicle comprises a driver support function 2, an information receiving device 3 arranged to receive information regarding a severe condition and the position of the severe condition, and an electronic control unit (ECU) 4 arranged to determine the distance between the vehicle and the severe condition. The electronic control unit 4 is configured to compare the determined distance to a first predetermined distance and to automatically adjust or disengage the driver support function if the determined distance is smaller than the first predetermined distance. The electronic control unit 4 is further configured to compare the determined distance to a second predetermined distance, and to automatically activate at least one warning light of the vehicle if the determined distance is smaller than the second predetermined distance.

The driver support function 2 may e.g. be a speed control function or a cruise control function, where the speed of the vehicle is set to a speed defined by the driver, or where the distance or the time gap to a vehicle ahead is set by the driver. Such a function will hold the speed of the vehicle automatically without the driver pressing the accelerometer pedal. The driver support function may also be a lane keeping function that will hold the vehicle between the two white lines of the lane in which the vehicle travels. This will aid the driver to stay in the proper lane. The driver support function may also be an automated brake function that can reduce the speed of the vehicle automatically if a dangerous situation is detected.

The information receiving device 3 is arranged to receive information regarding a severe condition and the position of the severe condition. The information receiving device 3 may be a radio receiver that can receive information on an FM band. The information receiving device 3 may also be a data receiver arranged to receive data information via e.g. 4G. The information regarding the severe condition and the position of the severe condition may be transmitted from a central information centre, a local information centre positioned e.g. at the roadside, or from another vehicle.

In one example, the information regarding the severe condition is a traffic condition, sent when a vehicle has had an accident and sends out information that an accident has occurred and the position of the accident. Rescue vehicles may also send out information regarding a rescue site, or an automatic system may send out a warning for a queue. In an example for a weather condition, a vehicle experiences a heavy snowfall and sends out information regarding the type of weather condition and the position where the weather position was detected. Local weather stations may also transmit weather information. If there is a construction site at a road, a beacon may transmit information regarding e.g. a temporary speed limit and the position of the site.

The electronic control unit 4 is connected to the data system of the vehicle, or is integrated in an existing electronic control unit of the vehicle. Part of the driver support function 2 may e.g. be integrated in the electronic control unit 4.

The severe condition is e.g. a weather condition, a road condition or a traffic condition. A weather condition may be a condition that limits the visibility, e.g. fog, heavy rain or heavy snowfall. The weather condition may also be based on road temperature, such that the driver support function can be deactivated if there is a risk of ice on the road, e.g. if a local cold spot is reached.

A road condition may be a construction site having a local speed limit, or where two lanes are merged to one. It is also possible to use a local beacon to transmit information of e.g. an oil spill on the road, or where the road is damaged in another way. A traffic condition may be a vehicle that has stopped at the roadside, a car crash or a combination of a traffic condition and a road condition, e.g. where an accident creates a severe road condition.

The warning lights of the vehicle may is in one example a hazard light or a rear fog light, but other types of warning lights may be used.

The method is performed when a vehicle is travelling, and may be active when the speed of the vehicle is above a predefined speed value. If a speed control function is only active over e.g. 30 km/h, there is no need to have a function that disengages the speed control when the vehicle travels with a slower speed. The speed at which the method is active may be set depending on the used driver support function or functions.

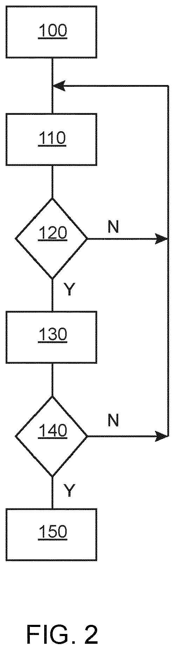

Fig. 2 shows a schematic flow chart of one example of the method for controlling a vehicle comprising a driver support function and an information receive device. The method is performed by an electronic control unit arranged in the vehicle, which is connected to the computer network of the vehicle.

In step 100, information regarding a severe condition and the position of the severe condition is received by the information receiving device. The information receiving device is e.g. a radio receiver or a data receiver using a mobile telephone system.

In steps 110, the distance from the vehicle to the position of the severe condition is determined by the electronic control unit. The position of the vehicle is obtained by e.g. a GPS unit of the vehicle. Where a GPS signal is not available, e.g. in a tunnel, the vehicle will estimate the position of the vehicle by using other sensors of the vehicle, such as speed sensors, yaw rate sensors steering wheel sensors, etc. Such position estimation is well known and is normally used in navigation systems of vehicles.

In step 120, the determined distance between the vehicle and the position of the severe condition is compared to a first predetermined distance. The first predetermined distance is a value or a table stored in e.g. a memory of the vehicle. The first predetermined distance may be dependent on different factors, e.g. on the speed of the vehicle or the type of severe condition.

In step 130, the driver support function is adjusted or disengaged automatically by the electronic control unit if the determined distance between the vehicle and the position of the severe condition is smaller than the first predetermined distance. In one example, the set speed of the speed control function may be altered, e.g. from 90 km/h to 70 km/h. In another example, the speed control function may be disengaged.

In step 140, the determined distance is compared to a second predetermined distance if the driver support function has been automatically adjusted or disengaged, i.e. if the determined distance is smaller than the first predetermined distance.

In step 150, at least one warning light of the vehicle is automatically activated if the determined distance is smaller than the second predetermined distance. In this case, the vehicle is closer to e.g. an accident and the hazard light is activated, such that vehicles behind the ego vehicle can be warned. In this case, it is ensured that the hazard light is activated even if the driver is busy with driving the vehicle. At accidents, some drivers are more stressed than others, and may not be able to activate the hazard light as quick as an automated system. In a severe weather condition, rear fog lights may be activated when the visibility is low to warn vehicles behind the ego vehicle, and/or front fog lights may be activated to allow the driver a better view.

The invention is not to be regarded as being limited to the embodiments described above, a number of additional variants and modifications being possible within the scope of the subsequent patent claims.

### REFERENCE SIGNS

- 1:: System
- 2:: Driver support function
- 3:: Information receiving device
- 4:: Electronic control unit
- 5:: Hazard light
- 6:: Rear fog light

- 20:: Vehicle

## Claims

1. Method for controlling a vehicle comprising a driver support function and an information receiving device, comprising the following steps:
- receiving information regarding a severe condition and the position of the severe condition,
- determining the distance from the vehicle to the position of the severe condition,
- comparing the determined distance to a first predetermined distance,
- if the determined distance is smaller than the first predetermined distance, automatically adjusting or disengaging the driver support function,
- if the driver support function has been automatically adjusted or disengaged, comparing the determined distance to a second predetermined distance,
- if the determined distance is smaller than the second predetermined distance, automatically activating at least one warning light of the vehicle.

2. Method according to claim 1, wherein the driver support function is a cruise control or self-driving function.

3. Method according to claim 1 or 2, wherein the severe condition is a weather condition, a road condition or a traffic condition.

4. Method according to any of claims 1 to 3, wherein the warning light of the vehicle is a hazard light or a rear fog light.

5. Method according to claim 4, wherein the hazard light is activated if the severe condition is a traffic condition or a road condition.

6. Method according to claim 4, wherein the fog light is activated if the severe condition is a weather condition indicating fog, heavy rain or dense snowfall.

7. A system (1) adapted to control a vehicle, where the vehicle comprises a driver support function (2), an information receiving device (3) arranged to receive information regarding a severe condition and the position of the severe condition, and an electronic control unit (4) arranged to determine the distance between the vehicle and the severe condition, to compare the determined distance to a predetermined distance and to automatically adjust or disengage the driver support function if the determined distance is smaller than the predetermined distance, **characterized in that** the electronic control unit (4) is further arranged to compare the determined distance to a second predetermined distance if the driver support function has been automatically adjusted or disengaged, and to automatically activate at least one warning light of the vehicle if the determined distance is smaller than the second predetermined distance.

8. System according to claim 7, wherein the driver support function (2) is a cruise control or self-driving function.

9. System according to claim 7 or 8, wherein the severe condition is weather condition, a road condition or a traffic condition.

10. System according to any of claims 7 to 9, wherein the warning light of the vehicle is a hazard light (5) or a rear fog light (6).

11. Vehicle (20), comprising a system according to claim 7 to 10.

12. A computer program comprising program code means for performing all the steps of claims 1 - 6 when said program is run on a computer.

13. A computer program product comprising program code means stored on a computer readable medium for performing all the steps of claims 1 - 6 when said program product is run on a computer.

## Patentansprüche

1. Verfahren zum Steuern eines Fahrzeugs, umfassend eine Fahrerunterstützungsfunktion und einer Informationsempfangsvorrichtung, umfassend die folgenden Schritte:
- Empfangen von Informationen hinsichtlich einer schwierigen Bedingung und der Position der schwierigen Bedingung,
- Bestimmen des Abstands von dem Fahrzeug zu der Position der schwierigen Bedingung,
- Vergleichen des bestimmten Abstands zu einem ersten vorbestimmten Abstand,
- wenn der bestimmte Abstand kleiner als der erste vorbestimmte Abstand ist, automatisches Einstellen oder Deaktivieren der Fahrerunterstützungsfunktion,
- wenn die Fahrerunterstützungsfunktion automatisch eingestellt oder deaktiviert wurde, Vergleichen des bestimmten Abstands mit einem zweiten vorbestimmten Abstand,
- wenn der bestimmte Abstand kleiner als der zweite vorbestimmte Abstand ist, automatisches Aktivieren von mindestens einem Warnlicht des Fahrzeugs.

2. Verfahren nach Anspruch 1, wobei die Fahrerunterstützungsfunktion eine Geschwindigkeitsregler- oder Selbstfahrfunktion ist.

3. Verfahren nach Anspruch 1 oder 2, wobei die schwierige Bedingung eine Wetterbedingung, eine Straßenbedingung oder eine Verkehrsbedingung ist.

4. Verfahren nach einem der Ansprüche 1 bis 3, wobei das Warnlicht des Fahrzeugs ein Wahnblinklicht oder ein Nebelschlusslicht ist.

5. Verfahren nach Anspruch 4, wobei das Wahrblinklicht aktiviert ist, wenn die schwierige Bedingung eine Verkehrsbedingung oder eine Straßenbedingung ist.

6. Verfahren nach Anspruch 4, wobei das Nebellicht aktiviert ist, wenn die schwierige Bedingung eine Wetterbedingung ist, die Nebel, Schwerregen oder dichten Schneefall angibt.

7. System (1), das dazu geeignet ist, ein Fahrzeug zu steuern, wobei das Fahrzeug eine Fahrerunterstützungsfunktion (2), eine Informationsempfangsvorrichtung (3), die angeordnet ist, um Informationen hinsichtlich einer schwierigen Bedingung und der Position der schwierigen Bedingung zu empfangen, und eine elektronische Steuereinheit (4) umfasst, die angeordnet ist, um den Abstand zwischen dem Fahrzeug und der schwierigen Bedingung zu bestimmen, den bestimmten Abstand mit einem vorbestimmten Abstand zu vergleichen und die Fahrerunterstützungsfunktion automatisch einzustellen oder zu deaktivieren, wenn der bestimmte Abstand kleiner als der vorbestimmte Abstand ist, **dadurch gekennzeichnet, dass** die elektronische Steuereinheit (4) ferner angeordnet ist, um den bestimmten Abstand mit einem zweiten vorbestimmten Abstand zu vergleichen, wenn die Fahrerunterstützungsfunktion automatisch eingestellt oder deaktiviert wurde, und um mindestens ein Warnlicht des Fahrzeugs automatisch zu aktivieren, wenn der bestimmte Abstand kleiner als der zweite vorbestimmte Abstand ist.

8. System nach Anspruch 7, wobei die Fahrerunterstützungsfunktion (2) eine Geschwindigkeitsregler- oder Selbstfahrfunktion ist.

9. System nach Anspruch 7 oder 8, wobei die schwierige Bedingung eine Wetterbedingung, eine Straßenbedingung oder eine Verkehrsbedingung ist.

10. System nach einem der Ansprüche 7 bis 9, wobei das Warnlicht des Fahrzeugs ein Wahnblinklicht (5) oder ein Nebelschlusslicht (6) ist.

11. Fahrzeug (20), umfassend ein System nach Anspruch 7 bis 10.

12. Computerprogramm, umfassend ein Programmcodemittel zum Durchführen aller Schritte nach Anspruch 1-6, wenn das Programm auf einem Computer ausgeführt wird.

13. Computerprogrammprodukt, umfassend ein Programmcodemittel, das auf einem computerlesbaren Medium zum Durchführen aller Schritte nach Anspruch 1-6 gespeichert ist, wenn das Programmprodukt auf einem Computer ausgeführt wird.

## Revendications

1. Procédé de commande d'un véhicule comprenant une fonction d'aide à la conduite et un dispositif de réception d'informations, comprenant les étapes suivantes :
- la réception d'informations concernant des conditions sévères et la position des conditions sévères,
- la détermination de la distance entre le véhicule et la position des conditions sévères,
- la comparaison de la distance déterminée à une première distance prédéterminée,
- si la distance déterminée est inférieure à la première distance prédéterminée, le réglage ou la désactivation automatique de la fonction d'aide à la conduite,
- si la fonction d'aide à la conduite a été réglée ou désactivée automatiquement, la comparaison de la distance déterminée à une seconde distance prédéterminée,
- si la distance déterminée est inférieure à la seconde distance prédéterminée, l'activation automatique d'au moins un témoin lumineux du véhicule.

2. Procédé selon la revendication 1, dans lequel la fonction d'aide à la conduite est un régulateur de vitesse ou une fonction de conduite autonome.

3. Procédé selon la revendication 1 ou 2, dans lequel les conditions sévères sont des conditions météorologiques, des conditions de route ou des conditions de circulation.

4. Procédé selon l'une quelconque des revendications 1 à 3, dans lequel le témoin lumineux du véhicule est un feu de détresse ou un feu antibrouillard arrière.

5. Procédé selon la revendication 4, dans lequel le feu de détresse est activé si les conditions sévères sont des conditions de circulation ou des conditions de route.

6. Procédé selon la revendication 4, dans lequel le feu antibrouillard est activé si les conditions sévères sont des conditions météorologiques indiquant du brouillard, de fortes pluies ou des chutes de neige denses.

7. Système (1) conçu pour contrôler un véhicule, où le véhicule comprend une fonction d'aide à la conduite (2), un dispositif de réception d'informations (3) agencé pour recevoir des informations concernant des conditions sévères et la position des conditions sévères, et une unité de commande électronique (4) agencée pour déterminer la distance entre le véhicule et les conditions sévères, pour comparer la distance déterminée à une distance prédéterminée et pour régler ou désactiver automatiquement la fonction d'aide à la conduite si la distance déterminée est inférieure à la distance prédéterminée, **caractérisé en ce que** l'unité de commande électronique (4) est en outre agencée pour comparer la distance déterminée à une seconde distance prédéterminée si la fonction d'aide à la conduite a été automatiquement réglée ou désactivée, et pour activer automatiquement au moins un témoin lumineux du véhicule si la distance déterminée est inférieure à la seconde distance prédéterminée.

8. Système selon la revendication 7, dans lequel la fonction d'aide à la conduite (2) est un régulateur de vitesse ou une fonction de conduite autonome.

9. Système selon la revendication 7 ou 8, dans lequel les conditions sévères sont des conditions météorologiques, des conditions de route ou des conditions de circulation.

10. Système selon l'une quelconque des revendications 7 à 9, dans lequel le témoin lumineux du véhicule est un feu de détresse (5) ou un feu antibrouillard arrière (6).

11. Véhicule (20), comprenant un système selon les revendications 7 à 10.

12. Programme informatique comprenant un moyen de code de programme pour exécuter toutes les étapes des revendications 1 à 6 lorsque ledit programme s'exécute sur un ordinateur.

13. Produit de programme informatique comprenant un moyen de code de programme stocké sur un support lisible par ordinateur pour exécuter toutes les étapes des revendications 1 à 6 lorsque ledit produit programme s'exécute sur un ordinateur.
